# EUROPÄISCHE PATENTANMELDUNG

(11) **EP 1 892 811 A2**
(43) Veröffentlichungstag der Anmeldung: **27.02.2008**
(21) Anmeldenummer: 07016708.5
(22) Anmeldetag: 25.08.2007
(51) Int. Cl.: H02J 3/38, H02M 7/5387

(54) **Stromrichterschaltungsanordnung und Verfahren zur Netzeinspeisung aus einer zeitlich veränderlichen Gleichspannungsquelle**

(30) Priorität: 25.08.2006 DE 102006039974
(71) Anmelder: SEMIKRON Elektronik GmbH & Co. KG, 90431 Nürnberg (DE)
(72) Erfinder: Schreiber, Dejan, 90408 Nürnberg (DE)

(57) **Zusammenfassung**

Schaltungsanordnung und Verfahren zur Umwandlung einer zeitlich nicht konstanten Gleichspannung (10), vorzugsweise aus einer Solarenergieanlage, in eine Wechselspannung (20). Die Schaltungsanordnung weist eine Eingangsdrossel (52) und eine H-Brücke (60) mit je einem ersten (620,720) und einem zweiten Stromventil (660,760), vorzugsweise einen RB-IGBT, pro Zweig auf, wobei jedes Stromventil eine schaltbare Durchlassrichtung und eine Sperrrichtung aufweist. Zwischen den beiden Zweigen des Wechselspannungsanschlusses der H-Brücke ist zusätzlich ein Kondensator (82) geschaltet. Im Verfahren arbeiten die RB-IGBTs der H-Brücke im zyklischen Pulsbetrieb und dienen hierbei gemeinsam mit der Eingangsdrossel (52) zeitweise als Hochsetzsteller.

## Beschreibung

Die Erfindung beschreibt eine Stromrichterschaltungsanordnung und ein zugehöriges Verfahren zur Einspeisung aus einer zeitlich nicht konstanten Gleichspannungsquelle mit einer beispielhaften Schwankung zwischen 25V und 200V in ein Wechselspannungsnetz mit einer Scheitelspannung von beispielhaft 230V. Eine derartige Stromrichterschaltungsanordnung findet beispielhaft Anwendung in Solarenergieanlagen. Hier ist die abgegebene Leistung und Spannung der Solarenergieanlage abhängig von der eingestrahlten Lichtintensität sowie der Verschaltung und Anzahl der Photozellen. Die hier erzeugte zeitlich nicht konstante Gleichspannung muss mittels einer Stromrichterschaltungsanordnung in ein Wechselspannungsnetz eingespeist werden.

Der Stand der Technik hierzu wird beispielhaft gebildet durch eine Stromrichterschaltungsanordnung mit einem Hochsetzsteller einem Zwischenkreis mit Pufferkondensator und einer Brückenschaltung, vorzugsweise einer H-Brückenschaltung mit einer Drossel und einem Kondensator in den Wechselspannungsanschlüssen.

Nachteilig an der Ausbildung einer derartigen Stromrichterschaltungsanordnung nach dem Stand der Technik ist, dass hierbei eine Vielzahl von Bauelementen notwendig sind und somit diese nicht kostengünstig herstellbar ist.

Der Erfindung liegt die Aufgabe zugrunde eine Stromrichterschaltungsanordnung sowie ein zugehöriges Verfahren zur Umwandlung einer nicht konstanten Gleichspannung in eine Wechselspannung vorzustellen, das eine geringe Anzahl von Bauelementen aufweist und somit kostengünstig herstellbar ist und das die Einspeisung einer Gleichspannung mit einem Spannungswert der geringer ist als der Scheitelwert der Wechselspannung gestattet.

Die Aufgabe wird erfindungsgemäß gelöst, durch die Maßnahmen der Merkmale der Ansprüche 1 und 4. Bevorzugte Ausführungsformen sind in den Unteransprüchen beschrieben.

Die erfindungsgemäße Schaltungsanordnung dient der Umwandlung einer nicht konstanten Gleichspannung in eine Wechselspannung wobei diese vorzugsweise einen Scheitelwert aufweist der über dem Maximalwert des Gleichspannungswertes liegt. Die Schaltungsanordnung weist eine mit der Gleichspannungsquelle verbundene Eingangsdrossel und eine nachgeschaltete H-Brücke auf, sowie einen Kondensator zwischen den beiden Wechselspannungsausgängen der H-Brücke.

Die H-Brücke weist je ein erstes und ein zweites Stromventil pro Zweig auf, wobei jedes Stromventil eine schaltbare Durchlassrichtung und eine Sperrrichtung aufweist. Es ist besonders vorteilhaft, wenn das jeweilige Stromventil als ein reverse blocking insulated gate bipolar transitor (RB-IGBT) ausgebildet ist.

Das erfindungsgemäße Verfahren zur Umwandlung einer nicht konstanten Gleichspannung in eine Wechselspannung mittels der genannten Schaltungsanordnung ist dadurch gekennzeichnet, dass die Stromventile der H-Brücke im zyklischen Pulsbetrieb arbeiten und hierbei gemeinsam mit der Eingangsdrossel als Hochsetzsteller dienen.

Der erfinderische Gedanke wird anhand der Ausführungsbeispiele in den Fig. 1 bis 4 näher erläutert.

Fig. 1 zeigt eine Schaltungsanordnung nach dem Stand der Technik.

Fig. 2 zeigt eine erste Ausgestaltung einer erfindungsgemäßen Schaltungsanordnung.

Fig. 3 zeigt eine zweite Ausgestaltung einer erfindungsgemäßen Schaltungsanordnung.

Fig. 4 zeigt Simulationsergebnisse einer ersten Ausgestaltung des erfindungsgemäßen Verfahrens.

Fig. 5 zeigt Simulationsergebnisse einer weiteren Ausgestaltung des erfindungsgemäßen Verfahrens.

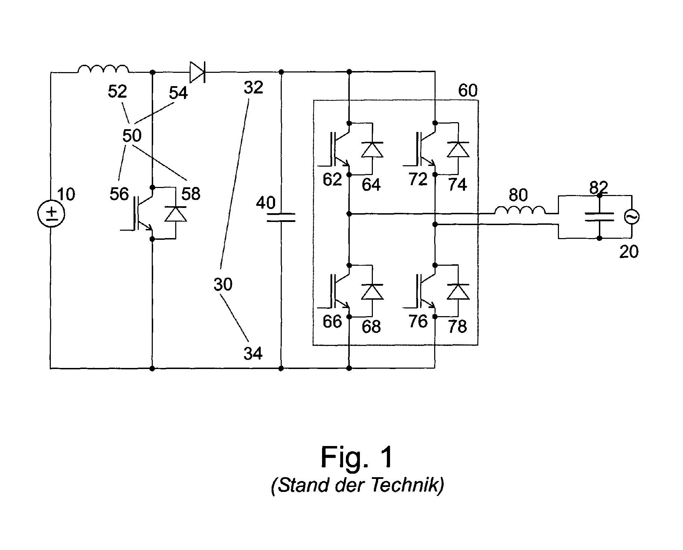

Fig. 1 zeigt exemplarisch eine bekannte Schaltungsanordnung nach dem Stand der Technik. Diese eine Schaltungsanordnung hat die Aufgabe eine Gleichspannung (10) an ihrem Eingang in eine Wechselspannung (20) an ihrem Ausgang zu wandeln. Bei der genannten Anwendung in einer Solarenergieanlage ist die Eingangsspannung (10) typischerweise eine Gleichspannung mit nicht konstantem Spannungswert über die Zeit.

Um die Eingangsspannung (10) mit einem großen Spannungsbereich (z.B. von 40V bis 200V für ein Netz mit einer Einspeisungsspannung von 230V) auf einen konstanten Wert für den Zwischenkreis (30) anzuheben weist die eine Schaltungsanordnung einen bekannten Hochsetzsteller (50) auf. Dieser besteht aus einem Schalter, ein Transistor (56) mit antiparallel geschalteter Diode (58), zum Kurzschluss der Eingangsgleichspannung der Schaltungsanordnung, sowie einer Eingangsdrossel (52) und einer nachgeschalteten Diode (54). Hierdurch wird im Zwischenkreis (30) eine Gleichspannung mit einem Spannungswert erzeugt, der über dem Scheitelwert der zu speisenden Wechselspannung liegt.

Nachgeschaltet dem Hochsetzsteller (50) weist die Schaltungsanordnung nach dem Stand der Technik einen Kondensator (40) als Energiespeicher des Zwischenkreises (30) zwischen den beiden nun quasikonstantes Potential aufweisenden Gleichspannungszweigen (32, 34) auf. Hierzu nachgeschaltet ist eine H-Brückenschaltung (60) bestehend aus einem ersten und einem zweiten Stromventil pro Zweig. Diese Stromventile sind ausgebildet als je ein Bipolartransistor (62, 66, 72, 76), vorteilhafterweise ein IGBT (insulated gate bipolar transistor) mit einer antiparallel geschalteten Diode (64, 68, 74, 78).

In einem Zweig des Wechselspannungsausgangs der H-Brücke (60) ist eine Ausgangsdrossel (80) sowie zwischen den beiden Zweigen ein Kondensator (82) geschaltet, der schaltungsgerecht mit dem zu speisenden Wechselspannungsnetz (20) verbunden ist.

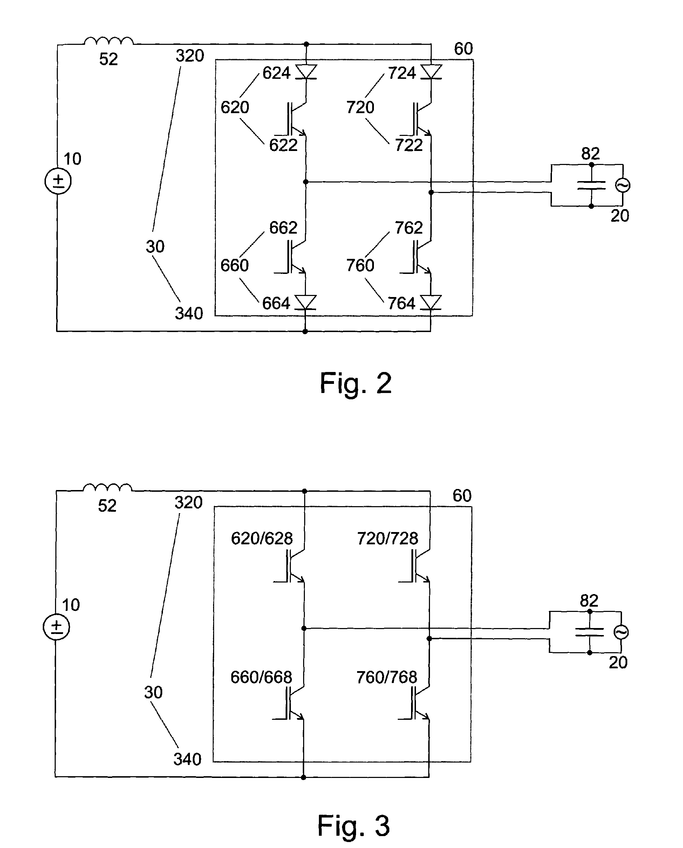

Fig. 2 zeigt eine erste Ausgestaltung einer erfindungsgemäßen Schaltungsanordnung. Hierbei ist in einem Gleichspannungszweig (320), hier demjenigen positiver Polarität, eine Eingangsdrossel (52) angeordnet. Dieser Eingangsdrossel (52) nachgeschaltet ist eine H-Brückenschaltung (60) mit je einem ersten (620, 720) und einem zweiten (660, 760) Stromventil pro Zweig. Diese Stromventile weisen eine schaltbare Durchlassrichtung und eine Sperrrichtung auf und sind jeweils ausgebildet als eine serielle Anordnung einer Diode (624, 664, 724, 764) und eines Transistors (622, 662, 722, 762), vorzugsweise eines IGBTs.

Zwischen die beiden Zweigen des Wechselspannungsausgangs der H-Brücke ist ein Kondensator (82) geschaltet, der mit dem zu speisenden Wechselspannungsnetz (20) schaltungsgerecht verbunden ist.

Fig. 3 zeigt eine zweite Ausgestaltung einer erfindungsgemäßen Schaltungsanordnung, wobei gegenüber derjenigen gemäß Fig. 2 die IGBTs durch RB-IGBTs (reverse blocking insulated gate bipolar transitor) (628, 668, 728, 768) ersetzt sind und hierdurch auf die Dioden (vgl. Fig. 2: 624, 664, 724, 764) verzichtet werden kann. Somit ist die Anzahl der benötigten Bauelemente gegenüber dem Stand der Technik noch deutlicher als gemäß Fig. 2 reduziert, was einerseits eine effizientere Funktion, wie auch andererseits eine günstigere Herstellung erlaubt.

Das erfindungsgemäße Verfahren zur Umwandlung einer nicht konstanten Gleichspannung in eine Wechselspannung mit einem Scheitelwert der über dem Maximalwert des Gleichspannungswertes liegt nutzt die Eingangsdrossel (52) zusammen mit den Stromventilen (620, 660, 720, 760) der H-Brücke (60) als Hochsetzsteller.

Hierzu weist das Verfahren eine zyklische Wiederholung eines ersten und eines anschießenden zweiten Teilzyklus auf. Der erste Teilzyklus ist gekennzeichnet durch die folgende Abfolge:
- Beide Stromventile (620, 660) eines ersten Zweiges der H-Brücke (60) sind leitend und es fließt ein Strom durch die Eingangsdrossel (52) wobei durch den Kurzschluss die zugehörige Stromstärke erhöht wird.
- Das erste Stromventil (620) des ersten Zweiges und das zweite Stromventil (760) des zweiten Zweiges sind für einen geeigneten Zeitabschnitt leitend, der Strom durch die Eingangsdrossel (52) fließt weiter gegen die Wechselspannung des zu speisenden Netzes, wobei sich die Stromstärke wieder verringert.
- Um alle Stromventile gleichmäßig zu belasten sind beide Stromventile (720, 760) des zweiten Zweiges der H-Brücke (60) leitend, wobei der Strom durch die Eingangsdrossel (52) weiter fließt und seine Stromstärke wieder erhöht wird.
   Alternativ können auch wiederum die Stromventile (620, 660) des ersten Zweiges der H-Brücke (60) leitend sein.
- Das erste Stromventil (620) des ersten Zweiges und das zweite Stromventil (760) des zweiten Zweiges sind leitend, der Strom durch die Eingangsdrossel (52) fließt weiter gegen die Wechselspannung des zu speisenden Netzes, wobei sich seine Stromstärke wiederum verringert.

Das zeitliche Verhältnis dieser zyklischen Abfolge innerhalb dieses ersten Teilzyklus ist derart gewählt, dass die erste Halbwelle des sinusförmigen Ausgangsstroms durch diese Pulsweitenmodulation geeignet angenähert wird. Der Ausgangskondensator (82) dient der Glättung der erzeugten Wechselspannung. Der zweite Teilzyklus ist gekennzeichnet durch folgende Abfolge, wobei auch hier der Strom durch die Eingangsdrossel (52) erhalten bleibt:
- Beide Stromventile (720, 760) eines zweiten Zweiges der H-Brücke (60) sind leitend.
- Das erste Stromventil (720) des zweiten Zweiges und das zweite Stromventil (660) des ersten Zweiges sind leitend.
- Beide Stromventile (620, 660) eines ersten Zweiges der H-Brücke (60) sind leitend. Alternativ sind die beiden Stromventile (720, 760) des zweiten Zweiges leitend.
- Das erste Stromventil (720) des zweiten Zweiges und das zweite Stromventil (660) des ersten Zweiges sind leitend.

Dieser zweite Teilzyklus erzeugt eine zweite Halbwelle, mit entgegengesetzter Polarität zur ersten Halbwelle.

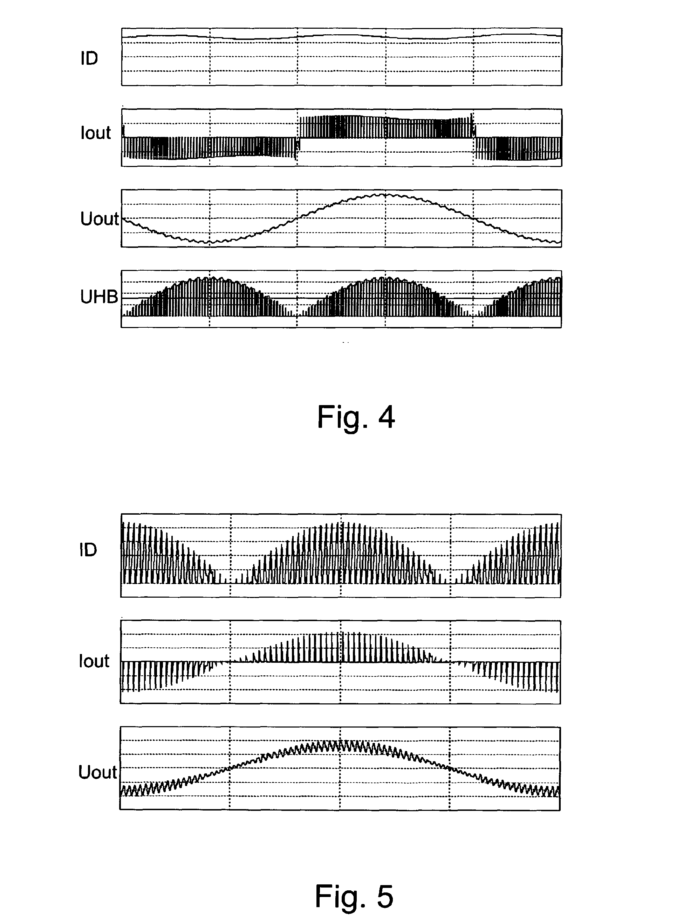

Fig. 4 zeigt eine erste Ausgestaltung des erfindungsgemäßen Verfahrens mit einer Eingangsdrossel (52) erster Induktivität, wobei diese wesentlich größer gewählt ist als diejenige in der zweiten unten beschriebenen Ausgestaltung. In dieser ersten Ausgestaltung des erfindungsgemäßen Verfahrens ist die Induktivität derart gewählt, dass der Strom (ID) durch die Eingangsdrossel (52) während des Pulsbetriebs innerhalb einer Halbwelle der Ausgangsspannung annährend konstant ist und nicht auf Null abfällt.

Annährend konstanter Verlauf des Stroms (ID) heißt hier, dass der Strom während einer Kurzschlussphase der Stromventile eines Zweiges der H-Brücke (60) geringfügig steigt und in der Einspeisephase, während diagonal angeordnete Stromventile der H-Brücke (60) leitend sind, wieder geringfügig sinkt. Diesem Verlauf überlagert ist eine sinusförmige Schwingung mit doppelter Frequenz der Netzspannung.

Durch die Pulsweitenmodulation der Ansteuerung der H-Brücke (60) weist die Einhüllende der Spannung (UHB) zwischen dem positiven (320) und den negativen (360) Anschluss der H-Brücke (60) somit einen sinusförmigen Verlauf auf, wobei die Spannung (UHB) selbst während der Kurzschlussphasen zu Null abfällt.

Die Summe der Zeitintervalle mit Kurzschlussphasen innerhalb einer Halbperiode der Ausgangsspannung ist bestimmt durch das Verhältnis der Eingangsspannung zum Mittelwert der Ausgangsspannung.

Der Ausgangsstrom (lout) mit annährend konstanter Amplitude bildet ein Pulsmuster mit einem Tastverhältnis welches zeitlich gemittelt einem sinusförmigen Verlauf entspricht.

Durch diese erste Ausgestaltung des erfindungsgemäßen Verfahrens wird die Gleichspannungsquelle (10) gleichmäßig belastet, da die Energie während einer Halbperiode in der Eingangsdrossel (52) gespeichert und wieder abgegeben wird. Am Ausgang wird in das zu speisende Netz pulsierend Strom eingespeist, wobei die erste Oberwelle (Grundwelle) des Stroms (lout) und die Spannung (Uout) in Phase sind.

Fig. 5 zeigt Simulationsergebnisse einer zweiten Ausgestaltung des erfindungsgemäßen Verfahrens. Hierbei ist die Induktivität der Eingangsdrossel (52) wesentlich geringer als bei oben beschriebener erster Ausgestaltung. Bei dieser Ausgestaltung sinkt, bedingt durch die geringe Induktivität der Eingangsdrossel (52), während der Pulsweitenmodulation der Strom (ID) durch die Eingangsdrossel (52) zeitweise zu Null.

Im geeignet gewählten Zeitintervall des jeweiligen Kurzschlusses der beiden Stromventile eines Zweiges der H-Brücke (60) steigt der Strom (ID) über der Eingangsdrossel (52). In denjenigen Zeitintervallen in denen diagonal angeordnete Stromventile der H-Brücke (60) leitend sind sinkt der Strom (ID) bis auf Null ab. Hierbei wird das Pulsweitenmodulations- Verfahren derart gesteuert, dass die Einhüllende des Stromverlaufs (ID) durch die Eingangsdrossel (52) sinusförmig ist.

Am Ausgang der H-Brücke (60) weist der Strom (lout) ebenfalls einen gepulsten Verlauf mit einer sinusförmigen Einhüllenden auf. Die Spannung (Uout) am Ausgang über dem Kondensator (82) zeigt gleichfalls einen sinusförmigen Verlauf und ist mit der Einhüllenden des Stromverlaufs (lout) in Phase.

Somit wird in dem jeweiligen Zeitintervall der Halbperiode aus der Gleichspannungsquelle (10) die aktuell notwendige Energie entnommen in der Eingangsdrossel (52) gespeichert und anschließend ins Netz (20) eingespeist. Hierdurch entsteht der sinusförmige Verlauf der Einhüllenden des Einspeisestroms (lout).

## Patentansprüche

1. Schaltungsanordnung zur Umwandlung einer zeitlich nicht konstanten Gleichspannung (10) in eine Wechselspannung (20), mit einer Eingangsdrossel (52) und einer H-Brücke (60) mit je einem ersten (620, 720) und einem zweiten (660, 760) Stromventil pro Zweig
wobei jedes Stromventil eine schaltbare Durchlassrichtung und eine Sperrrichtung aufweist und mit einem Kondensator (82) geschaltet zwischen den beiden Zweigen des Wechselspannungsanschlusses der H-Brücke (60).

2. Schaltungsanordnung nach Anspruch 1,
wobei das erste und zweite Stromventil (620, 660, 720, 760) je ein reverse blocking insulated gate bipolar transitor (RB-IGBT) (628, 668, 728, 768) ist.

3. Schaltungsanordnung nach Anspruch 1,
wobei das erste und zweite Stromventil (620, 660, 720, 760) jeweils aus einer seriellen Anordnung einer Diode (624, 664, 724, 764) und eines Transistors (622, 662, 722, 762) besteht.

4. Verfahren zur Umwandlung einer nicht konstanten Gleichspannung in eine Wechselspannung mittels einer Schaltungsanordnung nach Anspruch 1, wobei die Stromventile der H-Brücke (60) im zyklischen Pulsbetrieb arbeiten und hierbei gemeinsam mit der Eingangsdrossel (52) zeitweise als Hochsetzsteller dienen.

5. Verfahren nach Anspruch 4,
wobei ein erster Zyklus aus den Teilzyklen
• beide Stromventile (620, 660) eines ersten Zweiges der H-Brücke (60) sind leitend;
• das erste Stromventil (620) des ersten Zweiges und das zweite Stromventil (760) des zweiten Zweiges sind leitend.
• beide Stromventile (720, 760) eines zweiten Zweiges der H-Brücke (60) sind leitend;
• das erste Stromventil (620) des ersten Zweiges und das zweite Stromventil (760) des zweiten Zweiges sind leitend.
besteht und ein zweiter Zyklus aus den Teilzyklen
• beide Stromventile (720, 760) eines zweiten Zweiges der H-Brücke (60) sind leitend;
• das erste Stromventil (720) des zweiten Zweiges und das zweite Stromventil (660) des ersten Zweiges sind leitend.
• beide Stromventile (620, 660) eines ersten Zweiges der H-Brücke (60) sind leitend;
• das erste Stromventil (720) des zweiten Zweiges und das zweite Stromventil (660) des ersten Zweiges sind leitend.

6. Verfahren nach Anspruch 4,
wobei im Betrieb der Strom durch die Eingangsdrossel (52) kontinuierlich fließt und die Ausgangsspannung (Uout) und die erste Oberwelle des Ausgangsstroms (lout) in Phase sind.

7. Verfahren nach Anspruch 4,
wobei im Betrieb der Strom (ID) durch die Eingangsdrossel (52) einen sinusförmigen Verlauf der Einhüllenden aufweist und die Einhüllende des Ausgangsstroms (lout) mit der Ausgangsspannung (Uout) in Phase ist.
